# EUROPEAN PATENT APPLICATION

(11) **EP 4 782 735 A1**
(43) Date of publication of application: **29.07.2026**
(21) Application number: 25849421.0
(22) Date of filing: 31.10.2025
(51) Int. Cl.: F16K 47/02, F25B 41/35

(54) **EXPANSION VALVE AND REFRIGERATION DEVICE**

(30) Priority: 05.12.2024 JP 2024212501
(71) Applicant: DAIKIN INDUSTRIES, LTD., Osaka-Shi, Osaka 530-0001 (JP)
(72) Inventor: NISHIGUCHI, Tomoya, Osaka-shi, Osaka 530-0001 (JP); MIZUTANI, Mitsunori, Osaka-shi, Osaka 530-0001 (JP); INOUE, Akira, Osaka-shi, Osaka 530-0001 (JP)
(74) Representative: Hoffmann Eitle
(86) International application number: PCT/JP2025/038309
(87) International publication number: WO 2026/120954

(57) **Abstract**

An indoor expansion valve (51) is an expansion valve that decompresses a refrigerant. The indoor expansion valve (51) includes a valve main body (41), a first pipe (100), and a second pipe (200). The valve main body (41) has a valve chamber (43) in which a valve body (42) is accommodated. The first pipe (100) is connected to the valve chamber (43) in a first direction that is an axial direction of the valve body (42). The second pipe (200) is connected to the valve chamber (43) in a second direction intersecting the first direction. The second pipe (200) has a wall thickness (T) at a reference position (L0) that is an end portion (200a) on the valve chamber (43) side being smaller than the wall thickness (T) at a first position (L1) away from the reference position (L0) by a first distance on a side opposite to the valve chamber (43) in the second direction.

## Description

### TECHNICAL FIELD

The present invention relates to an expansion valve.

### BACKGROUND ART

Conventionally, there is an electric valve in which a rotor and a valve shaft rotate and a valve body is seated on a valve seat member to close a valve port (Patent Literature 1 (JP 2024-93962 A)).

### SUMMARY OF THE INVENTION

### <Technical Problem>

In the expansion valve in which a two-phase refrigerant flows, when there is a groove in a valve chamber, there is a problem that a liquid refrigerant easily enters the groove, and the rebounded liquid refrigerant splits a flow of a gas refrigerant having a large flow velocity, thereby generating abnormal noise.

### <Solution to Problem>

An expansion valve according to a first aspect is an expansion valve that decompresses the refrigerant, and includes a valve main body, a first pipe, and a second pipe. The valve main body has a valve chamber in which the valve body is accommodated. The first pipe is connected to the valve chamber in a first direction that is an axial direction of the valve body. The second pipe is connected to the valve chamber in a second direction intersecting the first direction. The second pipe has a wall thickness at a reference position, that is an end portion on a valve chamber side, being smaller than the wall thickness at a first position away from the reference position by a first distance on a side opposite to the valve chamber in the second direction.

In this expansion valve, by reducing the wall thickness of the end portion of the second pipe on the valve chamber side, it is possible to suppress the refrigerant from colliding with the end portion of the second pipe and becoming splashes, and to suppress generation of noise.

An expansion valve according to a second aspect is the expansion valve according to the first aspect, and the second pipe has an outer diameter at the reference position that is the same as an outer diameter at the first position.

In this expansion valve, the generation of noise can be suppressed without changing the outer diameter at the reference position and the outer diameter at the first position.

An expansion valve according to a third aspect is the expansion valve according to the second aspect, in which the second pipe has a largest wall thickness between a second position away from the reference position by a second distance larger than the first distance on the side opposite to the valve chamber, and a third position away from the reference position by a third distance larger than the second distance on the side opposite to the valve chamber. A distance between an inner peripheral surface at the reference position and the inner peripheral surface at the second position is smaller than a distance between the reference position and the second position in the second direction.

In this expansion valve, the generation of noise can be suppressed by making the distance between the inner peripheral surface at the reference position and the inner peripheral surface at the second position smaller than the distance between the reference position and the second position in the second direction.

An expansion valve according to a fourth aspect is the expansion valve according to the third aspect, in which the second pipe has the wall thickness at a fourth position away from the reference position by a fourth distance smaller than the second distance on the side opposite to the valve chamber, the wall thickness being larger than the wall thickness at the reference position and smaller than the wall thickness at the second position.

In this expansion valve, an inclination can be formed inside the second pipe by making the wall thickness at the fourth position between the reference position and the second position larger than the wall thickness at the reference position and smaller than the wall thickness at the second position.

An expansion valve according to a fifth aspect is the expansion valve according to the fourth aspect, in which the second pipe has the wall thickness at a fifth position away from the reference position by a fifth distance smaller than the second distance on the side opposite to the valve chamber, the wall thickness being the same as the wall thickness at the reference position.

In this expansion valve, a horizontal portion having a small wall thickness, and the inclination can be formed inside the second pipe.

An expansion valve according to a sixth aspect is the expansion valve according to the first aspect, in which the second pipe has an outer diameter at the reference position being smaller than the outer diameter at the first position.

In this expansion valve, since the outer diameter at the reference position is smaller than the outer diameter at the first position, the refrigerant can easily flow toward an inner wall of the second pipe.

An expansion valve according to a seventh aspect is the expansion valve according to any one of the first to sixth aspects, in which the wall thickness at the reference position is 0.7 mm or more.

In this expansion valve, a strength at the end portion of the second pipe can be secured.

An expansion valve according to an eighth aspect is the expansion valve according to any one of the first to seventh aspects, in which the valve main body has a valve seat. In the valve seat, a flow path area of the refrigerant is changed by movement of the valve body. The valve body has an inclined portion. When an opening degree of the expansion valve is in a fully closed state, the inclined portion is positioned closer to the first pipe side than the valve seat. When the opening degree of the expansion valve is in a first state, an inner wall of the second pipe is positioned on an extension line of the inclined portion.

In this expansion valve, since the refrigerant is guided toward the inner wall of the second pipe by the inclined portion of the valve body, the refrigerant is suppressed from colliding with the end portion of the second pipe and bouncing back.

An expansion valve according to a ninth aspect is the expansion valve according to the eighth aspect, in which in the first state, the opening degree of the expansion valve is 5% to 40% of the opening degree of the expansion valve when the fully open state is 100%.

In this expansion valve, when the opening degree of the expansion valve is small, the refrigerant tends to be gas-liquid two-phase.

An expansion valve according to a tenth aspect is the expansion valve according to the eighth aspect, in which the first state is a state where there is no obstacle between the inclined portion and the inner wall of the second pipe on the extension line of the inclined portion.

In this expansion valve, since the valve body moves in a direction away from the first pipe side in the first state, the refrigerant can easily flow toward the inner wall of the second pipe.

An expansion valve according to an eleventh aspect is the expansion valve according to any one of the first to tenth aspects, in which the refrigerant is a single refrigerant made of carbon dioxide or a mixed refrigerant containing carbon dioxide.

This expansion valve can suppress noise even when a high-pressure refrigerant flows.

A refrigeration apparatus according to a twelfth aspect includes a utilization unit and a heat source unit. The utilization unit has the expansion valve according to any one of the first to eleventh aspects. The heat source unit is connected to the utilization unit.

In this refrigeration apparatus, by reducing the wall thickness of the end portion of the second pipe of the expansion valve on the valve chamber side, it is possible to suppress the refrigerant flowing into the valve chamber from the first pipe of the expansion valve from colliding with the end portion of the second pipe and becoming splashes, and to suppress the generation of noise.

### BRIEF DESCRIPTION OF THE DRAWINGS

FIG. 1 is a diagram illustrating a refrigeration cycle of an air conditioner.
FIG. 2 is a simplified diagram illustrating a state of pressure-enthalpy of a CO2 refrigerant.
FIG. 3 is a detailed diagram (diagram using Fundamentals: 2005 Ashrae Handbook: Si Edition) illustrating the state of pressure-enthalpy of the CO2 refrigerant.
FIG. 4 is a longitudinal sectional diagram of an expansion valve according to the present embodiment.
FIG. 5A is a schematic sectional diagram of the expansion valve according to the present embodiment.
FIG. 5B is a diagram illustrating an example of a section of a second pipe.
FIG. 5C is a diagram illustrating an example of the section of the second pipe.
FIG. 6A is a schematic sectional diagram of the expansion valve according to modification 1A.
FIG. 6B is a diagram illustrating another example of the section of the second pipe.
FIG. 6C is a diagram illustrating another example of the section of the second pipe.
FIG. 7 is a schematic sectional diagram of the expansion valve according to modification 1B.
FIG. 8 is a schematic sectional diagram of the expansion valve according to modification 1C.
FIG. 9 is a schematic sectional diagram of the expansion valve according to modification 1D.
FIG. 10 is a schematic sectional diagram of the expansion valve according to modification 1E.
FIG. 11 is a schematic sectional diagram of the expansion valve according to modification 1F.
FIG. 12 is a longitudinal sectional diagram of the expansion valve according to modification 1G.
FIG. 13 is a diagram for describing a state of the refrigerant.

### DESCRIPTION OF EMBODIMENTS

### (1) Overall configuration of air conditioner

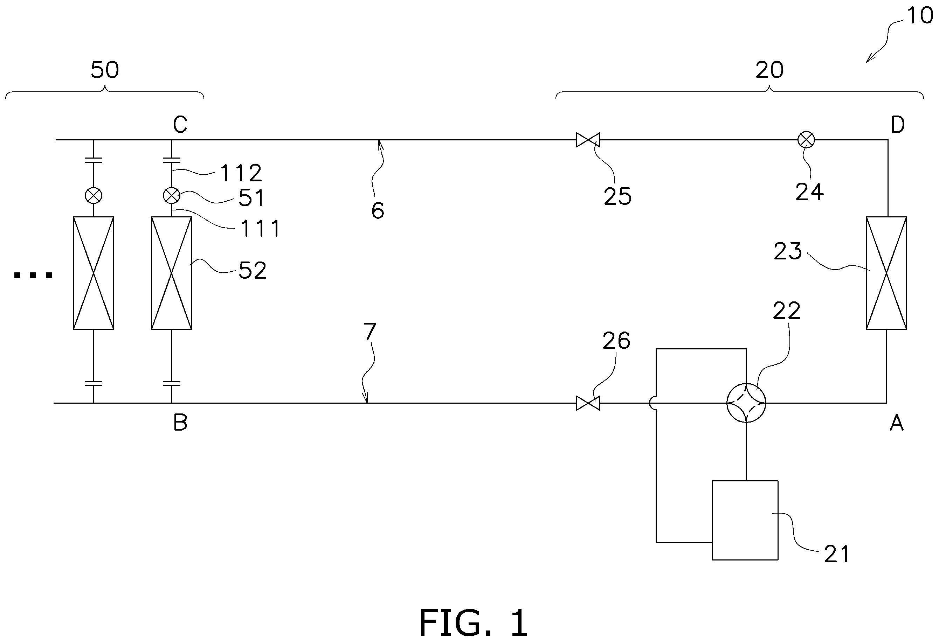

FIG. 1 is a diagram illustrating a refrigeration cycle of an air conditioner 10 including a utilization unit of a refrigeration apparatus employing an expansion valve of the present disclosure. The air conditioner 10 includes an indoor unit (the utilization unit of the refrigeration apparatus) 50 and an outdoor unit (a heat source unit of the refrigeration apparatus) 20. The indoor unit 50 has an indoor expansion valve (the expansion valve) 51. The outdoor unit 20 is connected to the indoor unit 50. The air conditioner 10 uses carbon dioxide (hereinafter, referred to as a CO2 refrigerant) as a refrigerant.

The air conditioner 10 is installed in a building or other structure to cool or heat a plurality of spaces, and is a multi-type air conditioner in which a plurality of the indoor units 50 are connected to one outdoor unit 20. The air conditioner 10 includes the outdoor unit 20, the plurality of indoor units 50, and refrigerant connection pipes 6 and 7 connecting the units 20 and 50.

The outdoor unit 20 has a compressor 21, a four-way switching valve 22, an outdoor heat exchanger 23, an outdoor expansion valve 24, shutoff valves 25 and 26, and the like.

Each of the indoor units 50 has the indoor expansion valve 51 and an indoor heat exchanger 52.

The indoor expansion valve 51 is an expansion valve that decompresses the refrigerant. The indoor expansion valve 51 is connected to a first connecting pipe 111 connected to the indoor heat exchanger 52. The indoor expansion valve 51 is connected to a second connecting pipe 112 connected to a connection portion with the refrigerant connection pipe 6.

The indoor unit 50 is installed on a ceiling or the like of each space (such as a room) in the building, and is connected to the outdoor unit 20 by the refrigerant connection pipes 6 and 7.

As illustrated in FIG. 1, the refrigeration cycle of the air conditioner 10 is a closed circuit in which the compressor 21, the four-way switching valve 22, the outdoor heat exchanger 23, the outdoor expansion valve 24, the indoor expansion valve 51, and the indoor heat exchanger 52 are connected by a refrigerant pipe including the refrigerant connection pipes 6 and 7.

### (2) Basic operation of air conditioner

The air conditioner 10 can perform an air conditioning operation for cooling and heating a space in the building by exchanging heat between the CO2 refrigerant flowing through the indoor heat exchanger 52 of the indoor unit 50 and indoor air.

The air conditioner 10 can switch between a heating operation and a cooling operation by switching a flow direction of the refrigerant using the four-way switching valve 22.

During the cooling operation, the outdoor heat exchanger 23 serves as a gas cooler, and the indoor heat exchanger 52 serves as an evaporator. On the other hand, during the heating operation, the outdoor heat exchanger 23 serves as the evaporator, and the indoor heat exchanger 52 serves as the gas cooler.

In FIG. 1, point A is a suction side of the compressor 21 during the heating operation, and point B is a discharge side of the compressor 21 during the heating operation. Point C is a refrigerant outlet side of the indoor heat exchanger 52 during the heating operation, and point D is a refrigerant inlet side of the outdoor heat exchanger 23 during the heating operation.

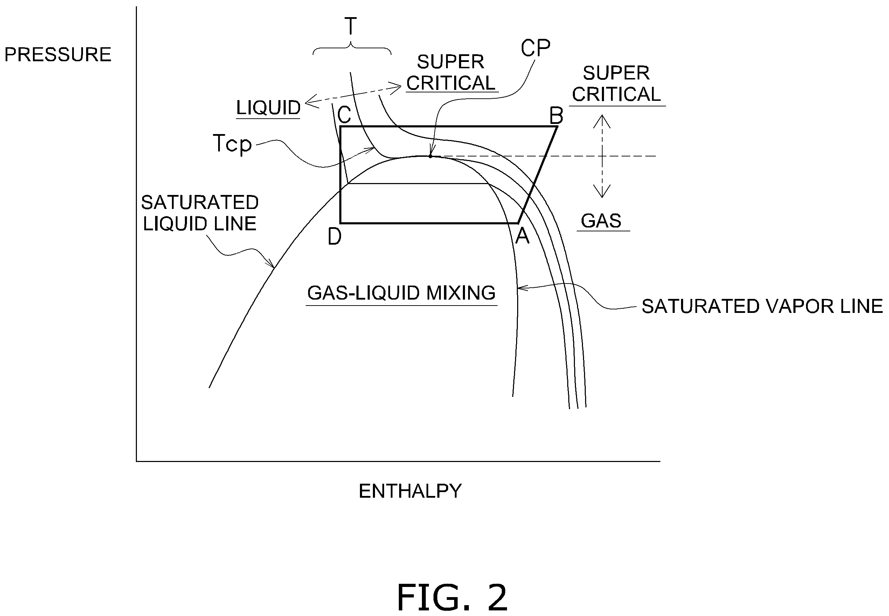

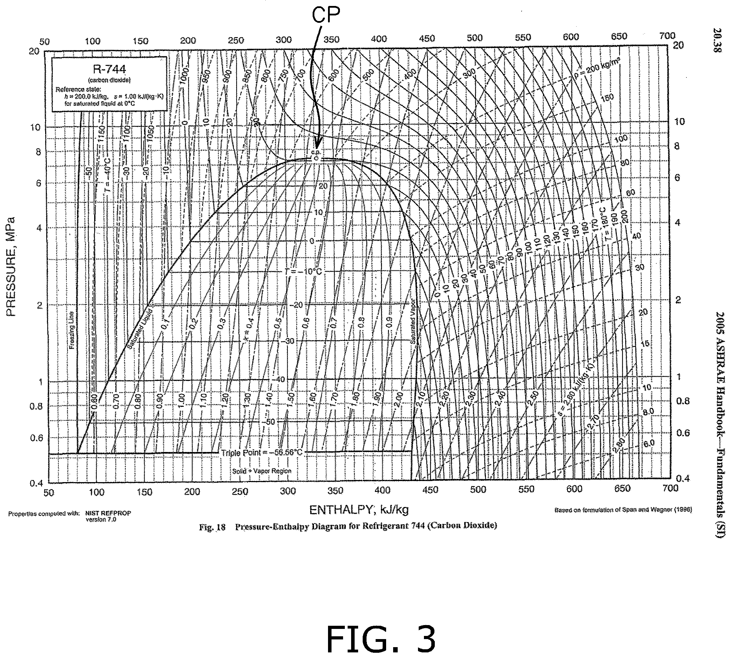

FIG. 2 is a diagram simply illustrating a state of pressure-enthalpy of the CO2 refrigerant, in which a vertical axis represents pressure and a horizontal axis represents enthalpy. FIG. 3 is a detailed diagram (diagram using Fundamentals: 2005 Ashrae Handbook: Si Edition) illustrating the state of pressure-enthalpy of the CO2 refrigerant.

Tcp is an isotherm passing through a critical point CP. In a region on the right side of this isotherm Tcp and equal to or higher than a critical pressure that is a pressure at the critical point CP, the CO2 refrigerant is a supercritical state, and is a fluid having both diffusibility that is a property of gas and solubility that is a property of liquid. The air conditioner 10 is operated in a refrigeration cycle including the supercritical state as indicated by a thick line in FIG. 2. In the refrigeration cycle of the heating operation, the CO2 refrigerant is compressed to a pressure exceeding the critical pressure by the compressor 21, cooled by the indoor heat exchanger 52 to be liquid, decompressed by the indoor expansion valve 51 and the outdoor expansion valve 24, evaporated by the outdoor heat exchanger 23 to be gas, and sucked into the compressor 21 again.

### (3) Structure of indoor expansion valve

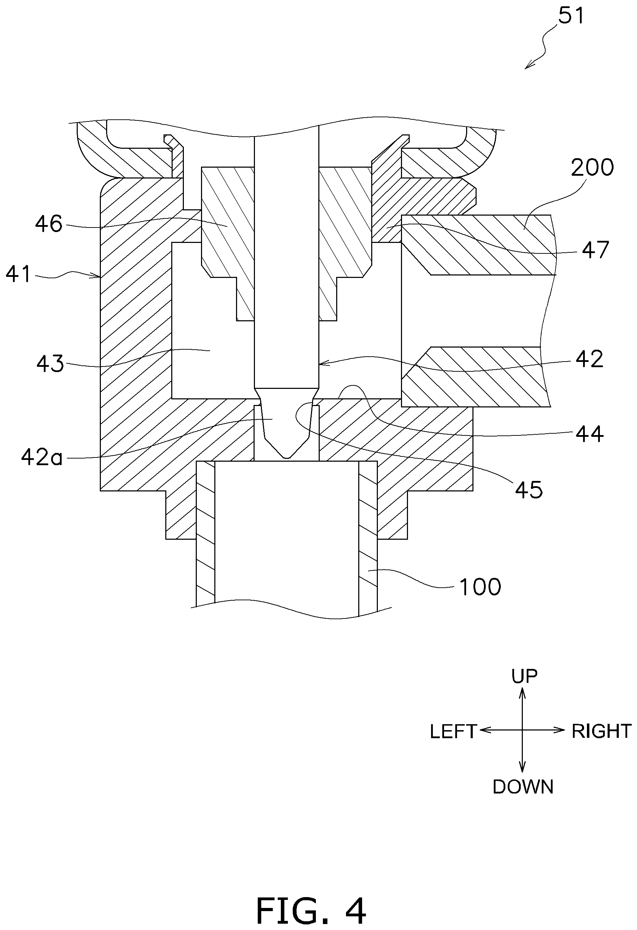

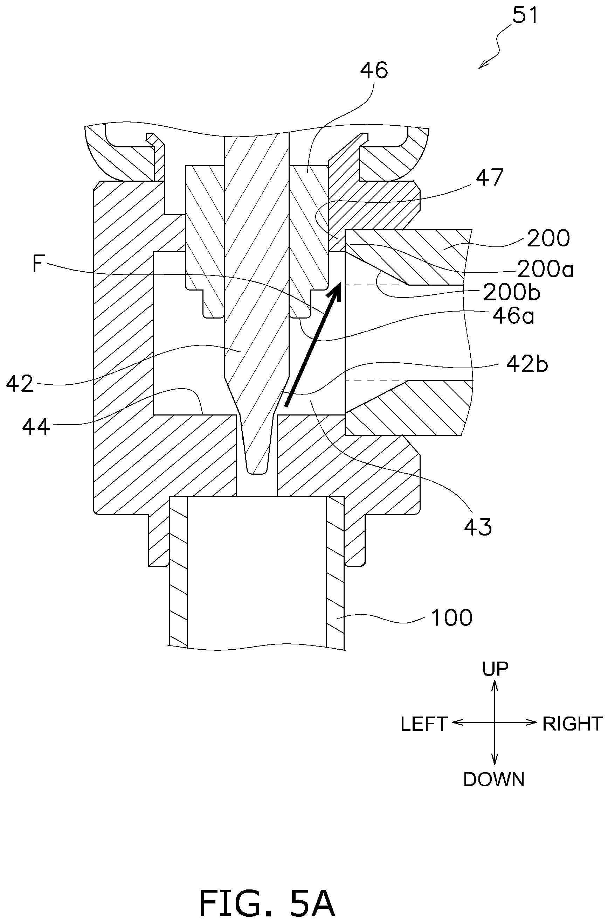

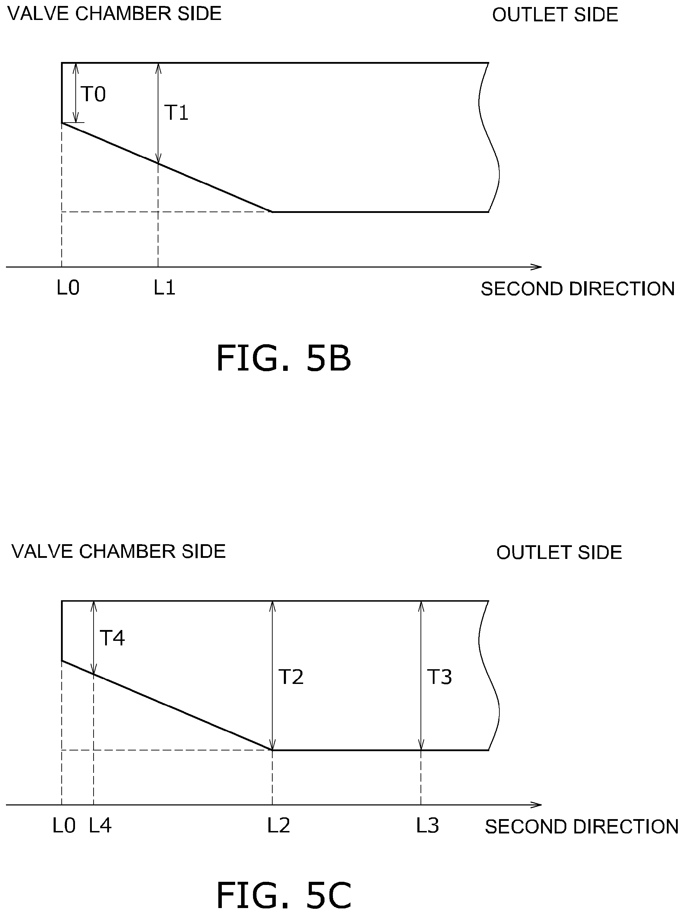

Next, a structure of the indoor expansion valve 51 will be described. FIG. 4 is a longitudinal sectional diagram of the indoor expansion valve 51. FIG. 5A is a schematic sectional diagram of the indoor expansion valve 51. FIGS. 5B and 5C are diagrams illustrating an example of a section of a second pipe 200. An arrow F in FIG. 5A indicates a flow direction of the refrigerant. In the present embodiment, the indoor expansion valve 51 is a motor-driven expansion valve. The indoor expansion valve 51 mainly includes a valve main body 41, a first pipe 100, a second pipe 200, and a drive mechanism (not illustrated).

### (3-1) Valve main body

The valve main body 41 has a valve chamber 43 in which a valve body 42 is accommodated. A guide member 46 is attached to the valve main body 41 so as to be inserted into the valve chamber 43 from above.

The valve body 42 has a valve head 42a at one end, and is advanced and retracted in a vertical direction (first direction) by the drive mechanism (not illustrated). In the present embodiment, the valve body 42 has a needle shape, and is disposed such that its axis line is oriented in the vertical direction.

The valve main body 41 has the valve chamber 43 formed of a hollow space into which the valve body 42 is inserted, the first pipe 100 that opens to face a valve head 42a in order to connect the valve chamber 43 to the first connecting pipe 111, the second pipe 200 that opens to the valve chamber 43 in a direction intersecting a valve body axis in order to connect the valve chamber 43 to the second connecting pipe 112, and a valve seat 44 in which a flow path area of the refrigerant between the valve seat 44 and the valve head 42a is changed by advancing and retracting the valve body 42. In the present embodiment, the valve main body 41 is disposed below the drive mechanism (not illustrated).

The valve main body 41 has the valve seat 44. The valve seat 44 is a member having an orifice hole 45 which the valve head 42a can contact. In the valve seat 44, the flow path area of the refrigerant is changed by movement of the valve body 42.

The valve body 42 has an inclined portion 42b. The inclined portion 42b is positioned closer to the first pipe 100 side than the valve seat 44 when an opening degree of the indoor expansion valve 51 is in a fully closed state.

When the opening degree of the indoor expansion valve 51 is in a first state, an inner wall of the second pipe 200 is positioned on an extension line of the inclined portion 42b. In other words, when the opening degree of the indoor expansion valve 51 is in the first state, there is no obstacle between the inclined portion 42b and the inner wall of the second pipe 200 on the extension line of the inclined portion 42b. For example, as illustrated in FIG. 5A, when the opening degree of the indoor expansion valve 51 is in the first state, a guide lower surface 46a of the guide member 46 does not exist between the inclined portion 42b and the inner wall of the second pipe 200 on the extension line of the inclined portion 42b.

When the opening degree of the indoor expansion valve 51 is the first state, the opening degree of the indoor expansion valve 51 is 5% to 40% of the opening degree when a fully open state is 100%. In the present embodiment, the opening degree of the indoor expansion valve 51 in the first state is 20% when the fully open state is 100%.

### (3-2) First pipe

In the present embodiment, the first pipe 100 is a pipe having one end connected to the first connecting pipe 111 and the other end connected to a lower side of the valve chamber 43. The first pipe 100 is connected to the valve chamber 43a in a first direction (an up-down direction) which is an axial direction of the valve body 42.

### (3-3) Second pipe

In the present embodiment, the second pipe 200 is a pipe having one end connected to the second connecting pipe 112 and the other end opened from a side of the valve chamber 43 toward the valve body 42. The second pipe 200 is connected to the valve chamber 43 in a second direction (left-right direction) intersecting the first direction.

In the present embodiment, the second pipe 200 is fixed by a stopper 47.

As illustrated in FIGS. 5A to 5C, in the present embodiment, the second pipe 200 has, in a radial direction, an inclined portion 200b such that an inner diameter at a first position L1 is smaller than that at a reference position L0 from a position between an outer peripheral surface and an inner peripheral surface of an end portion 200a of the second pipe 200 toward a refrigerant outflow direction. In other words, the second pipe 200 is provided with the inclined portion 200b from the middle in a wall thickness direction of the pipe.

As illustrated in FIG. 5B, the second pipe 200 has a wall thickness T (wall thickness T0) at the reference position L0 that is the end portion 200a on the valve chamber 43 side being smaller than a wall thickness T (wall thickness T1) at the first position L1 away from the reference position L0 by a first distance on a side opposite to the valve chamber 43 in the second direction. The wall thickness of the second pipe 200 at the reference position L0 is 0.7 mm or more.

As illustrated in FIG. 5C, the second pipe 200 has a largest wall thickness T between a second position L2 away from the reference position L0 by a second distance larger than the first distance on the side opposite to the valve chamber 43, and a third position L3 away from the reference position L0 by a third distance larger than the second distance on a side opposite to the valve chamber 43.

In the present embodiment, the wall thickness T of the second pipe 200 from the second position L2 to the third position L3 is 1.2 mm. The second pipe 200 has a wall thickness T (wall thickness T4) at a fourth position L4 away from the reference position L0 by a fourth distance smaller than the second distance L2 on the side opposite to the valve chamber 43, the wall thickness being larger than the wall thickness T (wall thickness T0) at the reference position L0 and smaller than the wall thickness T (wall thickness T2) at the second position L2.

In the present embodiment, the second pipe 200 has the inclined portion on an inner peripheral side of the second pipe 200 while an outer diameter of the second pipe 200 remains constant. Therefore, the second pipe 200 has an outer diameter at the reference position L0 that is the same as an outer diameter at the first position L1.

The end portion 200a that is the reference position L0 of the second pipe 200 faces the valve chamber 43 and is a portion having a largest inner diameter of the second pipe 200.

In the second pipe 200, the inner diameter of the second pipe 200 decreases from the end portion 200a that is the reference position L0 of the second pipe 200 toward the refrigerant outflow direction.

The inner diameter of the second pipe 200 is the smallest at the second position L2 and the third position.

### (4) Operation of indoor expansion valve

Next, an operation of the indoor expansion valve 51 will be described.

When the compressor 21 and the like are activated and the refrigerant starts to circulate in a refrigerant circuit of the air conditioner 10, a liquid refrigerant discharged from the indoor heat exchanger 52 passes through the first connecting pipe 111 and flows into the valve chamber 43 from the first pipe 100. The liquid refrigerant passes through a flow path formed by the valve head 42a and the orifice hole 45 of the valve seat 44, expands, blows out into the valve chamber 43, and flows into the second pipe 200 to collide with the inclined portion 200b on the inner peripheral side of the second pipe 200. Then, the liquid refrigerant flowing into the valve chamber 43 becomes a gas-liquid two-phase refrigerant, flows in the second direction, and flows out from the second pipe 200.

### (5) Features

(5-1)
The indoor expansion valve 51 according to the present embodiment is an expansion valve that decompresses the refrigerant. The indoor expansion valve 51 includes the valve main body 41, the first pipe 100, and the second pipe 200. The valve main body 41 has a valve chamber 43 in which a valve body 42 is accommodated. The first pipe 100 is connected to the valve chamber 43 in the first direction which is the axial direction of the valve body 42. The second pipe 200 is connected to the valve chamber 43 in the second direction intersecting the first direction. The second pipe 200 has the wall thickness T at the reference position L0 that is the end portion 200a on the valve chamber 43 side being smaller than the wall thickness T at the first position L1 away from the reference position L0 by a first distance on the side opposite to the valve chamber 43 in the second direction.

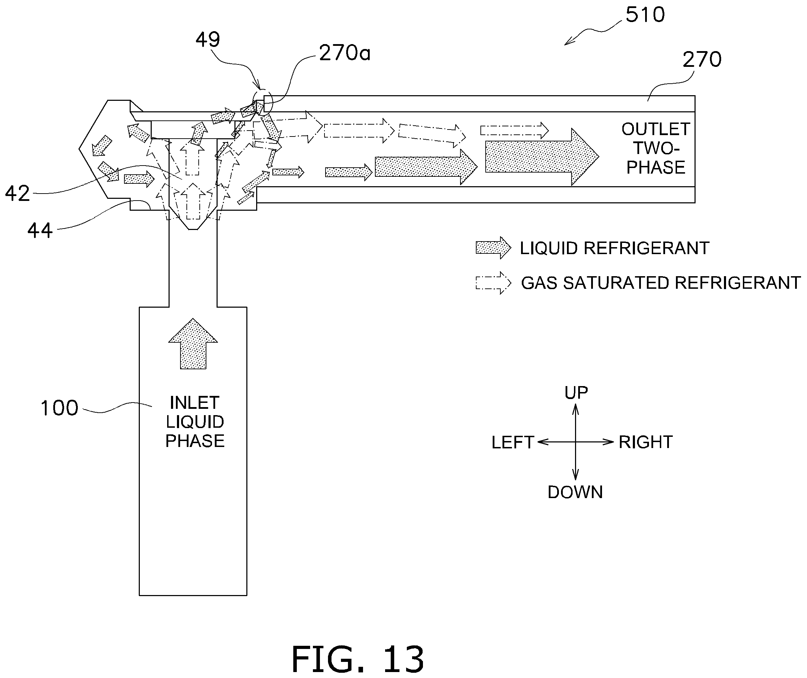

FIG. 13 is a diagram for describing a state of the refrigerant. When the opening degree of an indoor expansion valve 510 is, for example, 20% when the fully closed state is 100%, there is a gap between the valve seat 44 and the valve body 42. Since there is a gap around the valve body 42, there is naturally a gap in a paper surface direction of FIG. 13. In FIG. 13, solid arrows indicate liquid refrigerants. Dashed arrows indicate gas saturated refrigerants. In other words, the dashed arrow is an arrow indicating the gas saturated refrigerant passing through the gap between the valve body 42 and the valve seat 44.

During the heating operation, the liquid refrigerant of CO2 flows through the first pipe 100 of the indoor expansion valve 510. As illustrated in FIG. 13, if the wall thickness is not reduced and has a largest wall thickness at an end portion 270a of a second pipe 270 of the indoor expansion valve 510, a corner of the second pipe 270 remains to form a stepped groove 49. Therefore, when the wall thickness of the end portion 270a of the second pipe 270 is large, the liquid refrigerant becomes wave splashes at a step of the stepped groove 49 when passing through the indoor expansion valve 510. Then, the refrigerant passing through the second pipe 270 becomes the gas-liquid two-phase refrigerant by pressure recovery.

In the present embodiment, the indoor expansion valve 51 is connected such that the liquid refrigerant flowing from the indoor heat exchanger 52 enters the lower side of the indoor expansion valve 51 during the heating operation of the air conditioner 10. In the indoor expansion valve 51, the liquid refrigerant flowing into the valve chamber 43 flows toward the inclined portion 200b on the inner peripheral side of the second pipe 200. Therefore, noise generated when the refrigerant flowing from the first pipe 100 into the valve chamber 43 flows from the valve chamber 43 into the second pipe 200 and flows is reduced.

In the present embodiment, since one inclined portion (inclined surface) 200b is provided on the inner peripheral side of the second pipe 200, it is possible to suppress the cost when providing the inclined portion.

In the indoor expansion valve 51, by reducing the wall thickness of the end portion 200a of the second pipe 200 on the valve chamber 43 side, it is possible to suppress the refrigerant from colliding with the end portion 200a of the second pipe 200 and becoming splashes, and to suppress generation of noise.

(5-2)
In the indoor expansion valve 51 according to the present embodiment, the second pipe 200 has the outer diameter at the reference position L0 that is the same as the outer diameter at the first position L1.

In the indoor expansion valve 51, the generation of noise can be suppressed without changing the outer diameter at the reference position L0 and the outer diameter at the first position L1.

(5-3)
In the indoor expansion valve 51 according to the present embodiment, the second pipe 200 has the wall thickness T at the fourth position L4 away from the reference position L0 by the fourth distance smaller than the second distance on the side opposite to the valve chamber 43, the wall thickness being larger than the wall thickness T at the reference position L0 and smaller than the wall thickness T at the second position L2.

In the indoor expansion valve 51, an inclination can be formed inside the second pipe 200 by making the wall thickness T at the fourth position L4 between the reference position L0 and the second position L2 larger than the wall thickness T at the reference position L0 and smaller than the wall thickness T at the second position L2.

(5-4)
In the indoor expansion valve 51 according to the present embodiment, the wall thickness at the reference position L0 is 0.7 mm or more.

In the indoor expansion valve 51, a strength at the end portion 200a of the second pipe 200 can be secured.

(5-5)
In the indoor expansion valve 51 according to the present embodiment, the valve main body 41 has the valve seat 44. In the valve seat 44, the flow path area of the refrigerant is changed by movement of the valve body 42. The valve body 42 has an inclined portion 42b. The inclined portion 42b is positioned closer to the first pipe 100 side than the valve seat 44 when an opening degree of the indoor expansion valve 51 is in a fully closed state. When the opening degree of the indoor expansion valve 51 is in a first state, an inner wall of the second pipe 200 is positioned on an extension line of the inclined portion 42b.

In the indoor expansion valve 51, since the refrigerant is guided toward the inner wall of the second pipe 200 by the inclined portion 42b of the valve body 42, the refrigerant is suppressed from colliding with the end portion 200a of the second pipe 200 and bouncing back.

(5-6)
In the indoor expansion valve 51 according to the present embodiment, in the first state, the opening degree of the indoor expansion valve 51 is 20% of the opening degree when the fully open state is 100%.

In the indoor expansion valve 51, when the opening degree of the indoor expansion valve 51 is small, the refrigerant tends to be gas-liquid two-phase.

(5-7)
In the indoor expansion valve 51 according to the present embodiment, the first state is a state where there is no obstacle between the inclined portion 42b and the inner wall of the second pipe 200 on the extension line of the inclined portion 42b.

In the indoor expansion valve 51, since the valve body 42 moves in a direction away from the first pipe 100 side in the first state, the refrigerant can easily flow toward the inner wall of the second pipe 200.

(5-8)
In the indoor expansion valve 51 according to the present embodiment, the refrigerant is a single refrigerant made of carbon dioxide.

The indoor expansion valve 51 can suppress the noise even when the CO2 refrigerant as a high-pressure refrigerant flows.

(5-9)
The air conditioner 10 according to the present embodiment includes the indoor unit 50 and the outdoor unit 20. The indoor unit 50 has the indoor expansion valve 51. The outdoor unit 20 is connected to the indoor unit 50.

In the air conditioner 10, by reducing the wall thickness of the end portion 200a of the second pipe 200 of the indoor expansion valve 51 on the valve chamber 43 side, it is possible to suppress the refrigerant flowing into the valve chamber 43 from the first pipe 100 of the indoor expansion valve 51 from colliding with the end portion 200a of the second pipe 200 and becoming splashes, and to suppress the generation of noise.

### (6) Modifications

### (6-1) Modification 1A

In the present embodiment, a case where the second pipe 200 is provided with the inclined portion 200b from the middle in the wall thickness direction of the pipe has been described, but the present invention is not limited thereto. The second pipe may be provided with the inclined portion from the middle in a pipe axis direction. In modification 1A, a second pipe 210 has, on the inner peripheral side of the second pipe 210, a portion having a small wall thickness T in the second direction (left-right direction) and an inclined portion 210b.

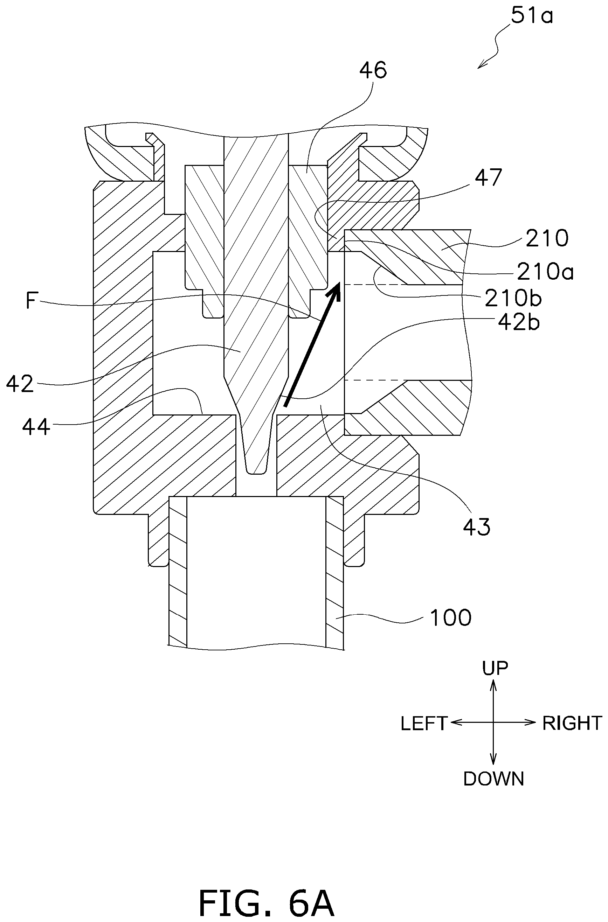

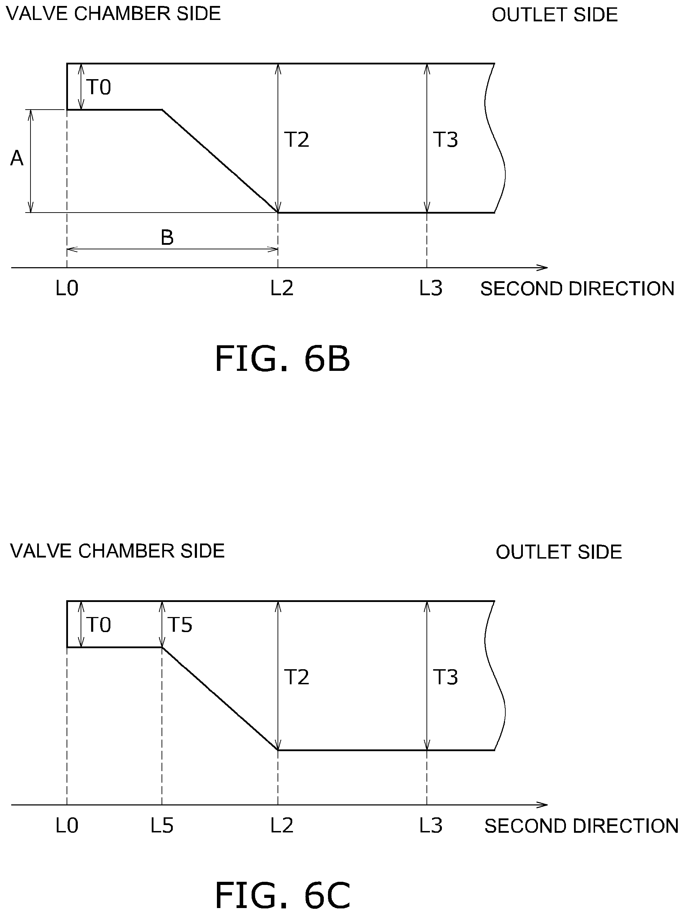

FIG. 6A is a schematic sectional view of an indoor expansion valve 51a according to modification 1A. FIGS. 6B and 6C are diagrams illustrating an example of a section of the second pipe 210 of the indoor expansion valve 51a of modification 1A. The arrow F in FIG. 6A indicates the flow direction of the refrigerant.

As illustrated in FIG. 6B, in the indoor expansion valve 51a of modification 1A, the second pipe 210 has a largest wall thickness T (wall thickness T2 and T3) between the second position L2 away from the reference position L0 by the second distance larger than the first distance on the side opposite to the valve chamber 43, and the third position L3 away from the reference position L0 by the third distance larger than the second distance on the side opposite to the valve chamber 43. A distance A between the inner peripheral surface at the reference position L0 and the inner peripheral surface at the second position L2 is smaller than a distance B between the reference position L0 and the second position L2 in the second direction. For example, it is assumed that the distance B between the reference position L0 and the second position L2 in the second direction is constant. In addition, it is assumed that a distance between the reference position L0 in the second direction and a position farthest from the valve chamber 43 side among positions having the wall thickness T0 is constant. In this case, when the distance A between the inner peripheral surface at the reference position L0 and the inner peripheral surface at the second position L2 is further reduced, an inclination angle of the inclined portion is reduced.

As illustrated in FIG. 6C, in the indoor expansion valve 51a according to modification 1A, the second pipe 210 has a wall thickness T (wall thickness T5) at a fifth position L5 away from the reference position L0 by the fifth distance smaller than the second distance on the side opposite to the valve chamber 43 being equal to the wall thickness T (wall thickness T0) at reference position L0.

The second pipe 210 has the same inner diameter at the reference position L0 and at the fifth position. In addition, the second pipe 210 has the same inner diameter at the second position L2 and the third position L3. In addition, the second pipe 210 has the inclined portion so that the inner diameter at the second position L2 and the third position L3 is smaller than the inner diameter at the reference position L0 and the fifth position L5.

In the indoor expansion valve 51a of modification 1A, the generation of noise can be suppressed by making the distance A between the inner peripheral surface at the reference position L0 and the inner peripheral surface at the second position L2 smaller than the distance B between the reference position L0 and the second position L2 in the second direction. In modification 1A, a horizontal portion having the small wall thickness T, and the inclination can be formed inside the second pipe 210.

### (6-2) Modification 1B

The second pipe of the indoor expansion valve may have, on the inner peripheral side, an orthogonal plane intersecting the pipe axis direction at a position away from an end portion of the second pipe on the valve chamber side on the side opposite to the valve chamber.

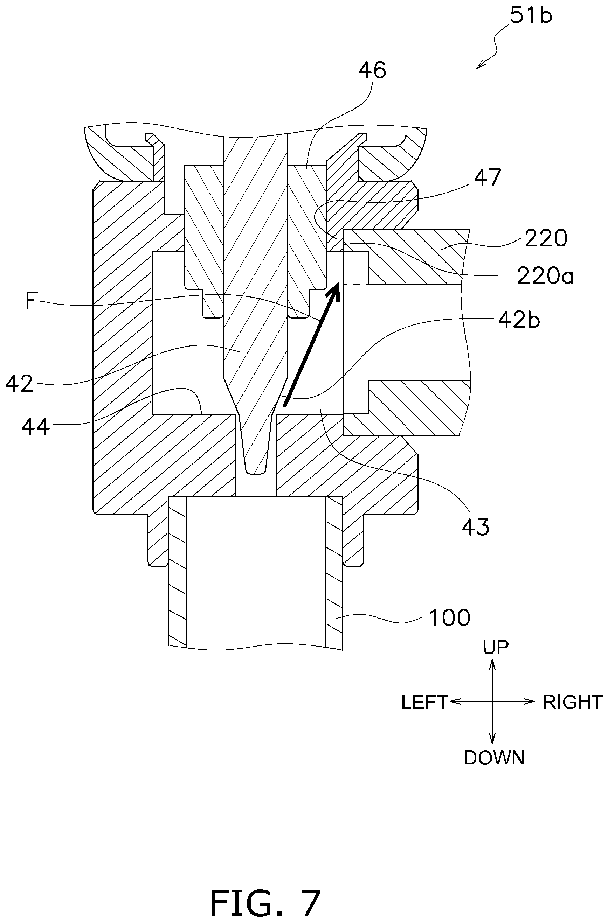

FIG. 7 is a schematic sectional diagram of an indoor expansion valve 51b according to modification 1B. The arrow F in FIG. 7 indicates the flow direction of the refrigerant. As illustrated in FIG. 7, in modification 1B, a second pipe 220 has, on the inner peripheral side of the second pipe 220, a horizontal portion having a small wall thickness in the second direction (left-right direction) and a vertical portion in the first direction (up-down direction).

### (6-3) Modification 1C

The second pipe of the indoor expansion valve may have, on the inner peripheral side, two or more inclined portions and a horizontal portion positioned between the inclined portions.

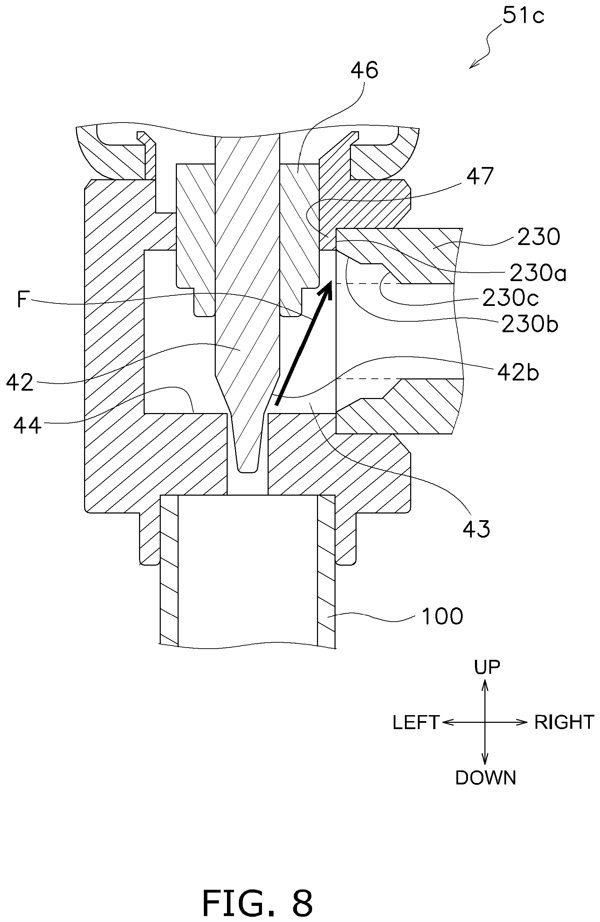

FIG. 8 is a schematic sectional diagram of an indoor expansion valve 51c according to modification 1C. The arrow F in FIG. 8 indicates the flow direction of the refrigerant. As illustrated in FIG. 8, in modification 1C, a second pipe 230 has, on the inner peripheral side of the second pipe 230, two inclined portions 230b and 230c, and a horizontal portion having a small wall thickness in the second direction (left-right direction) between the two inclined portions 230b and 230c. An inner diameter of the inclined portion 230b on an end portion 230a side is larger than an inner diameter of the horizontal portion having the small wall thickness T, and the inner diameter of the horizontal portion having the small wall thickness T is larger than an inner diameter of the inclined portion 230c at the position away on the side opposite to the valve chamber 43.

### (6-4) Modification 1D

The second pipe of the indoor expansion valve may be provided with the inclined portion only at a position from an upper half to an upper two-thirds of a radial section of the second pipe.

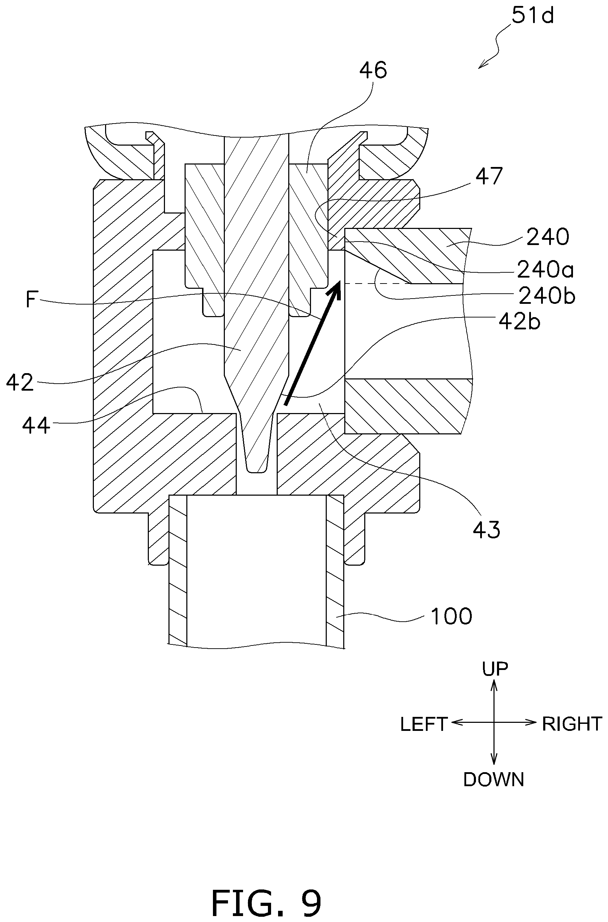

FIG. 9 is a schematic sectional diagram of an indoor expansion valve 51d according to modification 1D. The arrow F in FIG. 9 indicates the flow direction of the refrigerant. As shown in FIG. 9, in modification 1D, a second pipe 240 has an inclined portion 240b on the inner peripheral side on a side (an upper side) fixed by the stopper 47 such that the inner diameter decreases from an end portion 240a toward the refrigerant outflow direction.

### (6-5) Modification 1E

When a step is formed between the stopper 47 and the second pipe, the second pipe of the indoor expansion valve may have an L-shape on the valve chamber side of the second pipe to fill the step.

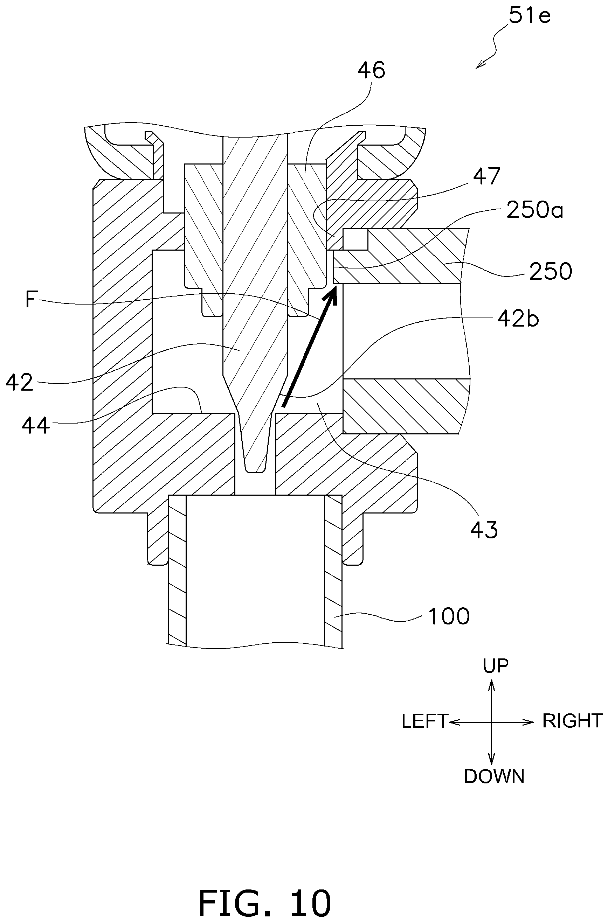

FIG. 10 is a schematic sectional diagram of an indoor expansion valve 51e according to modification 1E. The arrow F in FIG. 10 indicates the flow direction of the refrigerant. As illustrated in FIG. 10, in modification 1E, a second pipe 250 has an end portion 250a formed in the L-shape on an outer peripheral side of the side (upper side) fixed by the stopper 47. Thus, it is possible to prevent the step from being generated between the stopper 47 and the second pipe 250.

### (6-6) Modification 1F

When the step is formed between the stopper 47 and the second pipe, the inclined portion may be formed over an entire circumference on an outer diameter side on the valve chamber side of the second pipe of the indoor expansion valve to fill the step.

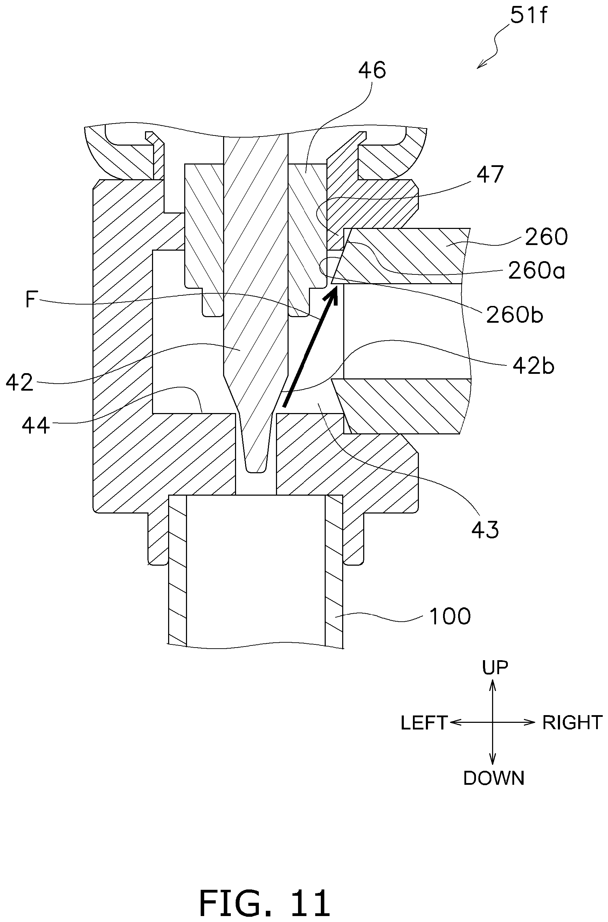

FIG. 11 is a schematic sectional diagram of an indoor expansion valve 51f according to modification 1F. The arrow F in FIG. 11 indicates the flow direction of the refrigerant. As illustrated in FIG. 11, in modification 1F, a second pipe 260 has an inclined portion 260b on the outer peripheral surface such that the outer diameter increases from an end portion 260a toward the refrigerant outflow direction. In modification 1F, the second pipe 260 has the outer diameter of the end portion 260a at the reference position L0 being smaller than the outer diameter at the first position L1 away from the reference position L0 by a first distance on the side opposite to the valve chamber 43.

In the indoor expansion valve 51f of modification 1F, since the outer diameter at the reference position L0 is smaller than the outer diameter at the first position L1, the refrigerant can easily flow toward the inner wall of the second pipe 200.

### (6-7) Modification 1G

The indoor expansion valve 51 of the present embodiment has the stopper 47, but the indoor expansion valve may not have the stopper.

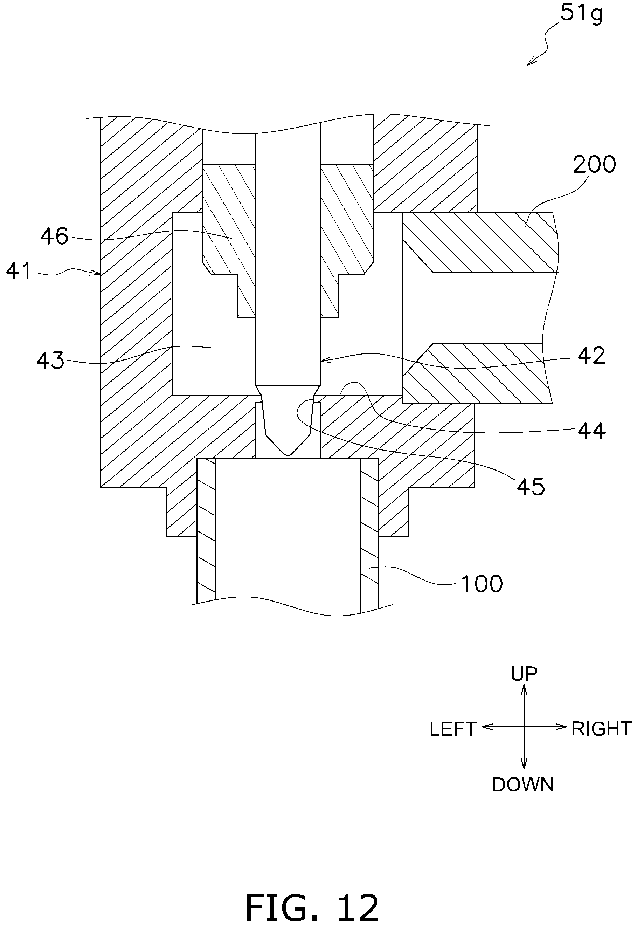

FIG. 12 is a longitudinal sectional diagram of an indoor expansion valve 51g according to modification 1G. As illustrated in FIG. 12, the indoor expansion valve 51g according to modification 1G includes the valve main body 41, the first pipe 100, the second pipe 200, and the drive mechanism (not illustrated). The valve main body 41 has the valve body 42, the valve chamber 43, the valve seat 44, the orifice hole 45, and the guide member 46. The first pipe 100 is joined to the valve chamber 43 of the valve main body 41 in the first direction (up-down direction). The second pipe 200 is joined to a right side in FIG. 12 of the valve chamber 43 of the valve main body 41 in the second direction (left-right direction).

In the indoor expansion valve 51g of modification 1G, the generation of noise can be suppressed even when the stopper is not provided.

### (6-8) Modification 1H

In the present embodiment, a case where the refrigerant is a single refrigerant made of carbon dioxide has been described, but a mixed refrigerant containing carbon dioxide may be used. The refrigerant is not limited to the single refrigerant made of carbon dioxide and the mixed refrigerant containing carbon dioxide.

### (6-9) Modification 1I

The expansion valve of the present disclosure is applicable to the outdoor expansion valve of the heat source unit of the refrigeration apparatus.

(6-10) Although the embodiment of the present disclosure has been described above, it will be understood that various changes in form and details can be made without departing from the spirit and scope of the present disclosure described in the claims.

### REFERENCE SIGNS LIST

6, 7 refrigerant connection pipe
10 air conditioner (refrigeration apparatus)
20 outdoor unit (heat source unit)
41 Valve main body
42 valve body
42a valve head
42b inclined portion
43 valve chamber
44 valve seat
45 orifice hole
46 guide member
46a guide lower surface
47 stopper
49 stepped groove
50 indoor unit (utilization unit)
51, 51a, 51b, 51c, 51d, 51e, 51f, 510 indoor expansion valve (expansion valve)
100 First pipe
111 first connecting pipe
112 second connecting pipe
200, 210, 220, 230, 240, 250, 260, 270 Second pipe
200a, 210a, 220a, 230a, 240a, 250a, 260a, 270a end portion
200b, 210b, 230b, 230c, 240b, 260b inclined portion
A, B distance
L0 reference position
L1 first position
L2 second position
L3 third position
L4 fourth position
L5 fifth position
T wall thickness

### CITATION LIST

### PATENT LITERATURE

Patent Literature 1: JP 2024-93962 A

## Claims

1. An expansion valve (51, 51a, 51b, 51c, 51d, 51e, 51f) that decompresses a refrigerant, the expansion valve comprising:
a valve main body (41) having a valve chamber (43) in which a valve body (42) is accommodated;
a first pipe (100) connected to the valve chamber in a first direction that is an axial direction of the valve body; and
a second pipe (200, 210, 220, 230, 240, 250, 260) connected to the valve chamber in a second direction intersecting the first direction, wherein
the second pipe has a wall thickness (T) at a reference position (L0), that is an end portion (200a) on a valve chamber side, being smaller than the wall thickness at afirst position (L1) away from the reference position by a first distance on a side opposite to the valve chamber in the second direction.

2. The expansion valve according to claim 1, wherein the second pipe has an outer diameter at the reference position that is the same as an outer diameter at the first position.

3. The expansion valve according to claim 2, wherein
the second pipe has a largest wall thickness between a second position (L2) away from the reference position by a second distance larger than the first distance on the side opposite to the valve chamber, and a third position (L3) away from the reference position by a third distance larger than the second distance on the side opposite to the valve chamber, and
a distance (A) between an inner peripheral surface at the reference position and the inner peripheral surface at the second position is smaller than a distance (B) between the reference position and the second position in the second direction.

4. The expansion valve according to claim 3, wherein the second pipe has the wall thickness at a fourth position (L4) away from the reference position by a fourth distance smaller than the second distance on the side opposite to the valve chamber, the wall thickness being larger than the wall thickness at the reference position and smaller than the wall thickness at the second position.

5. The expansion valve according to claim 4, wherein the second pipe has the wall thickness at a fifth position (L5) away from the reference position by a fifth distance smaller than the second distance on the side opposite to the valve chamber, the wall thickness being the same as the wall thickness at the reference position.

6. The expansion valve according to claim 1, wherein the second pipe has an outer diameter at the reference position being smaller than the outer diameter at the first position.

7. The expansion valve according to any one of claims 1 to 6, wherein the wall thickness at the reference position is 0.7 mm or more.

8. The expansion valve according to any one of claims 1 to 7, wherein
the valve main body has a valve seat (44) in which a flow path area of the refrigerant is changed by movement of the valve body,
the valve body has an inclined portion (42b) positioned closer to the first pipe side than the valve seat when an opening degree of the expansion valve is in a fully closed state, and
an inner wall of the second pipe is positioned on an extension line of the inclined portion when the opening degree of the expansion valve is in a first state.

9. The expansion valve according to claim 8, wherein in the first state, the opening degree of the expansion valve is 5% to 40% of the opening degree of the expansion valve when afully open state is 100%.

10. The expansion valve according to claim 8, wherein the first state is a state where there is no obstacle between the inclined portion and the inner wall of the second pipe on the extension line of the inclined portion.

11. The expansion valve according to any one of claims 1 to 10, wherein the refrigerant is a single refrigerant made of carbon dioxide or a mixed refrigerant containing carbon dioxide.

12. A refrigeration apparatus (10) comprising:
a utilization unit (50) having the expansion valve (51, 51a, 51b, 51c, 51d, 51e, 51f) according to any one of claims 1 to 11; and
a heat source unit (20) connected to the utilization unit.
